# EUROPÄISCHE PATENTANMELDUNG

(11) **EP 2 353 936 A1**
(43) Veröffentlichungstag der Anmeldung: **10.08.2011**
(21) Anmeldenummer: 10152503.8
(22) Anmeldetag: 03.02.2010
(51) Int. Cl.: B60Q 1/26, B60Q 1/32, B60Q 3/02, B60Q 3/06

(54) **Leuchtmitteleinsatz und Leuchte für ein Nutzfahrzeug**

(71) Anmelder: Schmitz Cargobull AG, 48341 Altenberge (DE)
(72) Erfinder: Beelmann, Bernhard, 45721, Haltern am See (DE)
(74) Vertreter: Cohausz & Florack

(57) **Zusammenfassung**

Dargestellt und beschrieben ist ein Leuchtmitteleinsatz (2) zur Verwendung in einer Leuchte (1) eines Nutzfahrzeugs (N), insbesondere Lastkraftwagens, Anhängers und/oder Sattelaufliegers, mit einem Leuchtmittel und einer Fassung (10). Damit eine einfachere, schnellere und damit kostengünstigere Herstellung von Nutzfahrzeugen mit einer Reihe unterschiedlicher Leuchten erfolgen kann, ist ein Gehäuse (3) vorgesehen, das Leuchtmittel in einem Innenraum (4) des Gehäuses (3) und die Fassung (10) außen am Gehäuse (3) angeordnet und das Gehäuse (3) mit einem transparenten Gehäuseabschnitt (8) zur Abstrahlung des Lichts des Leuchtmittels aus dem Innenraum (4) versehen.

## Beschreibung

Die Erfindung betrifft einen Leuchtmitteleinsatz zur Verwendung in einer Leuchte eines Nutzfahrzeugs, insbesondere Lastkraftwagens, Anhängers und/oder Sattelaufliegers, mit einem Leuchtmittel und einer Fassung. Ferner betrifft die Erfindung eine Leuchte eines Nutzfahrzeugs, insbesondere Lastkraftwagens, Anhängers und/oder Sattelaufliegers, mit wenigstens einem Sockel und einem Leuchtmitteleinsatz, wobei der Sockel eine Anschlusseinrichtung aufweist und wobei die Fassung des Leuchtmitteleinsatzes elektrisch leitend mit der Anschlusseinrichtung verbunden ist. Im Übrigen betrifft die Erfindung ein Leuchtensystem für Nutzfahrzeuge, insbesondere Lastkraftwagen, Anhänger und/oder Sattelauflieger, mit wenigstens zwei Leuchtmitteleinsätzen und einem Sockel, wobei der Sockel eine Anschlusseinrichtung aufweist.

Nutzfahrzeuge der bekannten Art, insbesondere Sattelauflieger und dergleichen, weisen eine Reihe von unterschiedlichen Leuchten, etwa in Form von Rückleuchten, Innenraumleuchten und/oder Leuchten zur Konturmarkierung auf, in denen verschiedenste Leuchtmittel zum Einsatz kommen. Leuchten zur Konturmarkierung können dabei seitlich am Nutzfahrzeug angebrachte Seitenmarkierungsleuchten oder Umrissleuchten sein. Letztere sind vorn an der Stirnwand und/oder der Rückwand des Nutzfahrzeugs vorgesehen. Den Leuchten eines Nutzfahrzeugs ist dabei gemeinsam, dass sie wenigstens einen Sockel und wenigstens einen Leuchtmitteleinsatz aufweisen. Der Sockel weist eine elektrische Anschlusseinrichtung auf, die elektrisch leitend mit einer Fassung des Leuchtmitteleinsatzes verbunden ist. Der Leuchtmitteleinsatz als solcher umfasst neben der Fassung noch das eigentliche Leuchtmittel zur Erzeugung eines Lichtstrahls. Bezogen auf ein Nutzfahrzeug bilden entsprechende Leuchtmitteleinsätze und Leuchten ein sogenanntes Leuchtensystem, das unterschiedliche Leuchteneinsätze und Sockel umfasst.

Die große Anzahl verschiedener Leuchten und Leuchtmitteleinsätze ist bei der Herstellung von Nutzfahrzeugen sowie bei deren Reparatur problematisch, da eine sehr große Anzahl unterschiedlicher Bauteile bevorratet werden muss. Des Weiteren muss sichergestellt werden, dass stets die richtigen Leuchtmitteleinsätze mit den entsprechenden Sockeln der zu bestückenden Leuchten verwendet werden. Bisherige Versuche, eine begrenzte Anzahl von Leuchtmitteleinsätzen und Leuchten modular miteinander zu kombinieren, um die für die Fertigung von Nutzfahrzeugen benötigten Beleuchtungseinrichtungen zusammenzusetzen, haben aufgrund des hohen Aufwands für die Herstellung der einzelnen Leuchten bzw. für den Austausch einzelner Leuchtmitteleinsätze bereits vormontierter Leuchten nicht zu einer nennenswerten Reduzierung der Herstellungskosten für die Nutzfahrzeuge geführt.

Der vorliegenden Erfindung liegt daher die Aufgabe zugrunde, den Leuchtmitteleinsatz, die Leuchte sowie das Leuchtensystem der eingangs genannten und zuvor näher beschriebenen Art derart auszugestalten und weiterzubilden, dass eine einfachere, schnellere und damit kostengünstigere Herstellung von Nutzfahrzeugen mit einer Reihe unterschiedlicher Leuchten erfolgen kann.

Die genannte Aufgabe ist bei einem Leuchtmitteleinsatz mit den Merkmalen des Oberbegriffs von Anspruch 1 dadurch gelöst, dass ein Gehäuse vorgesehen ist, dass das Leuchtmittel in einem Innenraum des Gehäuses und die Fassung außen am Gehäuse angeordnet sind und dass das Gehäuse einen transparenten Gehäuseabschnitt zur Abstrahlung des Lichts des Leuchtmittels aus dem Innenraum aufweist.

Die Erfindung beruht also mit anderen Worten auf der Kapselung des Leuchtmittels in einem Innenraum eines Gehäuses im Unterschied zur Kapselung des Leuchtmittels in einem Innenraum der Leuchte. Damit das Leuchtmittel trotz der Kapselung im Gehäuse des Leuchtmitteleinsatzes elektrisch leitend mit einem Sockel einer Leuchte verbunden werden kann, ist die Fassung des Leuchtmitteleinsatzes außerhalb des Gehäuses angeordnet. Im Übrigen weist das Gehäuse des Leuchtmitteleinsatzes, ähnlich einer Leuchte selbst, einen transparenten bzw. teiltransparenten Gehäuseabschnitt zur Abstrahlung des Lichts des Leuchtmittels aus dem Innenraum des Gehäuses auf. Aufgrund dieser Ausgestaltung der Leuchtmitteleinsätze können diese selbst einen Teil des Leuchtengehäuses bilden. Damit ist es nicht mehr erforderlich, den Innenraum einer Leuchte über einen Gehäusedeckel vollständig nach außen abzuschließen, was typischerweise dadurch erfolgt, dass eine Abdeckung der Leuchte, die regelmäßig gleichzeitig einen transparenten Gehäuseteil der Leuchte bildet, auf einen Leuchtensockel aufgeclipst oder aufgeschraubt wird.

Die Montage einer Leuchte kann erfindungsgemäß sehr einfach dadurch erfolgen, dass der Leuchtmitteleinsatz in einen korrespondierenden Leuchtensockel eingebracht wird. Da das Leuchtmittel des Leuchtmitteleinsatzes bereits durch das Gehäuse des Leuchtmitteleinsatzes gekapselt ist, ist ein Aufbringen eines Gehäusedeckels entbehrlich. Dabei ist der transparente Gehäuseabschnitt zur Abstrahlung des Lichts des Leuchtmittels bereits im Gehäuse des Leuchtmitteleinsatzes integriert. Auf diese Weise können die Art der Abstrahlung des Lichts des Leuchtmittels und dessen Farbe gezielt beeinflusst werden, ohne dass dies durch weitere Elemente der Leuchte, wie etwa einen Gehäusedeckel, erfolgen müsste. Bedarfsweise ist lediglich eine Abdichtung der Verbindung zwischen der Fassung des Leuchtmitteleinsatzes und dem Sockel der Leuchte erforderlich, damit es beispielsweise nicht zu einem Kurzschluss kommt.

Bei einer ersten bevorzugten Ausführungsform des Leuchtmitteleinsatzes ist vorgesehen, dass das Leuchtmittel eine Leuchtdiode ist oder durch eine Mehrzahl von Leuchtdioden gebildet wird. Dadurch wird etwa verhindert, dass das Leuchtmittel in dem Gehäuse des Leuchtmitteleinsatzes überhitzt, so dass das Gehäuse verhältnismäßig klein ausgebildet sein kann. Des Weiteren erlaubt die Verwendung einer Leuchtdiode oder von Leuchtdioden ein hohes Maß an gestalterischer Freiheit bei der Ausgestaltung und Formgebung des Gehäuses.

Alternativ oder zusätzlich kann vorgesehen sein, dass das Gehäuse einen Gehäuseboden, einen Gehäusemantel und einen Gehäusekopf aufweist. Dabei kann die Fassung dem Gehäusemantel und/oder dem Gehäuseboden zugeordnet sein. Dagegen ist der transparente Gehäuseabschnitt vorzugsweise dem Gehäusekopf zugeordnet. Auf diese Weise erfolgt eine einfache Trennung zwischen der Fassung und dem transparenten Gehäuseabschnitt. Andererseits können ohne weiteres geeignete Geometrien des Gehäuses bereitgestellt werden. Das Gehäuse kann beispielsweise mehr oder weniger asymmetrisch ausgebildet sein.

Bei einer entsprechenden Ausgestaltung eines Leuchtmitteleinsatzes kann vorgesehen sein, dass der Gehäusemantel in Längserstreckung einen im Wesentlichen konstanten oder sich in Richtung des Gehäusebodens verjüngenden Querschnitt aufweist. Auf diese Weise kann sichergestellt werden, dass der Gehäusemantel problemlos in einen Sockel einer Leuchte eingesteckt werden kann. Um das Einstecken des Gehäusemantels in einen Sockel einer Leuchte weiter zu vereinfachen, kann vorgesehen sein, dass der Querschnitt des Gehäusemantels symmetrisch ausgebildet ist.

Alternativ oder zusätzlich kann an dem Gehäuse, insbesondere am Gehäusemantel, ein Mittel vorgesehen sein, das das Eindrehen des Leuchtmitteleinsatzes in einen Sockel einer Leuchte erlaubt. Zusätzlich oder als Ersatz für die zuvor genannten Mittel zum Einbringen des Leuchtmitteleinsatzes können am Gehäuse Mittel zum Festlegen eines Dichtelements vorgesehen sein. In diesem Zusammenhang bietet es sich an, wenn die Mittel zum Festlegen des Dichtelements am Gehäusemantel vorgesehen sind. Dadurch kann der Leuchtmitteleinsatz zusammen mit dem entsprechenden Dichtelement in einen Sockel einer Leuchte eingebracht werden. Dies kann zu einer unmittelbaren Abdichtung der Fassung führen, ohne dass hierzu weitere Montageschritte erforderlich sind.

Um sicherzustellen, dass die Fassung in der vorbestimmten Weise mit einem Sockel einer Leuchte zusammenwirkt, der Leuchtmitteleinsatz aber sehr einfach und schnell in einem Sockel einer Leuchte montiert werden kann, kann ein Positionierungselement vorgesehen sein. Das Positionierungselement erlaubt letztlich einen positionsgenauen Einbau des Leuchtmitteleinsatzes in einer Leuchte. Besonders effektiv ist es, wenn das Positionierungselement außen am Gehäusemantel vorgesehen ist. Grundsätzlich kann das Positionierungselement in einfacher Weise als Rippe, Rille und/oder Finger ausgebildet sein. Das Positionierungselement wirkt dann beim Verbinden des Leuchtmitteleinsatzes mit dem Sockel mit einem korrespondierenden Positionierungselement des Sockels so zusammen, dass ein fehlerhafter Einbau des Leuchtmitteleinsatzes in den Sockel möglichst vermieden wird.

Eine schnelle und unkomplizierte Montage eines Leuchtmitteleinsatzes kann beispielsweise dadurch sichergestellt werden, dass die Fassung als Steckfassung, Schraubfassung oder Bajonettfassung ausgebildet ist.

Positiv wirkt es sich auf die Herstellungskosten des Leuchtmitteleinsatzes aus, wenn das Gehäuse aus Kunststoff gefertigt ist. Die Verwendung von Kunststoff als Gehäusematerial erlaubt zusätzlich eine höhere Freiheit bei der Formgebung des Gehäuses. Da das Gehäuse einen Innenraum ausbilden muss, in dem das Leuchtmittel vorgesehen ist, bietet es sich an, wenn das Gehäuse aus zwei oder mehreren spritzgegossenen Bauteilen gefertigt ist. Diese können beispielsweise zusammengesteckt und/oder miteinander verklebt sein.

Die eingangs genannte Aufgabe wird auch durch eine Leuchte mit den Merkmalen des Oberbegriffs von Anspruch 8 dadurch gelöst, dass der Leuchtmitteleinsatz nach einem der Ansprüche 1 bis 7 ausgebildet ist, dass der Sockel eine Aufnahme mit einer Öffnung aufweist, durch die der Leuchtmitteleinsatz in die Aufnahme eingeführt ist, und dass die Innenkontur der Aufnahme und die Außenkontur des Leuchtmitteleinsatzes einander wenigstens abschnittsweise wenigstens im Wesentlichen entsprechen.

Die erfindungsgemäße Leuchte beruht folglich darauf, dass einerseits ein Leuchtmitteleinsatz der zuvor beschriebenen Art verwendet wird und andererseits die Gestalt des Sockels und des Leuchtmitteleinsatzes aufeinander abgestimmt sind. Dazu weist der Sockel eine Aufnahme mit einer Öffnung auf, durch die der Leuchtmitteleinsatz in die Aufnahme einführbar ist. Allerdings ist die Aufnahme in Bezug auf den Leuchtmitteleinsatz nicht beliebig weit ausgebildet. Vielmehr ist die Innenkontur der Aufnahme derart an den Leuchtmitteleinsatz angepasst, dass die Innenkontur der Aufnahme und die Außenkontur des Leuchtmitteleinsatzes einander abschnittsweise mehr oder weniger entsprechen. Wenigstens in dem entsprechenden Abschnitt bilden der Leuchtmitteleinsatz und der Sockel wenn überhaupt nur einen sehr geringen Spalt zwischen sich aus, so dass das Eindringen von Schmutz oder Feuchtigkeit von außen wenigstens im Wesentlichen verhindert oder jedenfalls verringert wird.

Dadurch, dass die Aufnahme und der Leuchtmitteleinsatz in geeigneter Weise aufeinander abgestimmt sind, bedarf es keiner weiteren Gehäuseabdeckung der Leuchte, um die Leuchte als solche gegenüber äußeren Einflüssen in Bezug auf Schmutz und Feuchtigkeit zu schützen. Es versteht sich, dass in diesem Zusammenhang die Innenkontur der Aufnahme und die Außenkontur des Leuchtmitteleinsatzes in einem entsprechenden Abschnitt vorzugsweise aneinander anliegen.

Bei der Leuchte kann es sich um eine Rückleuchte des Nutzfahrzeugs handeln. Es kann aber auch vorgesehen sein, dass die Leuchte als Leuchte zur Konturmarkierung des Nutzfahrzeugs ausgebildet ist. Die Leuchte ist dann beispielsweise eine Umrissleuchte und/oder eine Seitenmarkierungsleuchte, die seitlich am Nutzfahrzeug angebracht wird. Die Umrissleuchte wird dagegen an der Stirnwand und/oder an der Rückwand des Nutzfahrzeugs vorgesehen. Alternativ oder zusätzlich kann es sich bei der Leuchte aber auch um eine Innenraumleuchte handeln, die den Innenraum bzw. den Laderaum beleuchtet. Die Innenraumleuchte kann dazu ausgebildet sein, ins Dach oder in eine Seitenwand des Nutzfahrzeugs integriert zu werden.

Bei einer ersten bevorzugten Ausgestaltung der Leuchte ist vorgesehen, dass sich die Innenkontur der Aufnahme und die Außenkontur des Leuchtmitteleinsatzes einander im Bereich der Öffnung im Wesentlichen entsprechen. Dadurch wird im Wesentlichen verhindert, dass Fremdstoffe von außen in den Zwischenraum zwischen der Aufnahme und dem Leuchtmitteleinsatz gelangen. Durch entsprechend geringe Spaltmaße kann zudem der optische Eindruck der Leuchte als solcher verbessert werden.

Insbesondere Feuchtigkeit kann in geeigneter Weise von dem Verbindungsbereich zwischen der Anschlusseinrichtung des Sockels und der Fassung des Leuchtmitteleinsatzes ferngehalten werden, wenn zwischen dem Leuchtmitteleinsatz und der Aufnahme eine umlaufende Abdichtung vorgesehen ist. Die Abdichtung verhindert dabei ein Eindringen von Feuchtigkeit bzw. Spritzwasser bis hin zur Anschlusseinrichtung. In diesem Zusammenhang ist es bevorzugt, wenn die Abdichtung zwischen der Öffnung und der Anschlusseinrichtung des Sockels vorgesehen ist. Zudem sollte die Abdichtung den Leuchtmitteleinsatz über seinen gesamten Umfang umgreifen. Eine einfache und kostengünstige Lösung besteht zudem darin, die Abdichtung in Form eines Dichtelements oder in Form einer Passfläche auszubilden. Bei der Verwendung eines Dichtelements bietet es sich an, wenn der Leuchtmitteleinsatz abschnittsweise eine kreisförmige Kontur aufweist und dort das Dichtelement in Form eines O-Rings angeordnet ist.

Insgesamt ist es besonders effektiv, wenn die Abdichtung dem Gehäusemantel zugeordnet ist. Die Abdichtung kann auf diese Weise ohne Beeinflussung der Fassung einerseits und des transparenten Gehäuseabschnitts des Leuchtmittels andererseits vorgesehen sein.

Damit die Leuchtmitteleinsätze von unbefugten Personen nicht ohne weiteres aus dem Sockel der Leuchte entfernt werden können, sind die Gehäusemäntel der Leuchtmitteleinsätze bedarfsweise vollständig in der Aufnahme des Sockels aufgenommen. Auf diese Weise wird die von außen zugängliche Angriffsfläche des Leuchtmitteleinsatzes verringert und so ein Herausziehen bzw. Herausdrehen vermieden. Ein unbefugter Zugriff wird noch effektiver vermieden, wenn auch der Gehäusekopf des Leuchtmitteleinsatzes vollständig in der Aufnahme des Sockels aufgenommen ist. Weiter bevorzugt entsprechen sich dann die innenkonturen der Aufnahme, etwa im Bereich ihrer Öffnung, und/oder die Außenkontur des Leuchtmitteleinsatzes im Bereich des Gehäusekopfes einander.

Bei einem Leuchtensystem mit den Merkmalen des Oberbegriffs von Anspruch 13 ist die eingangs genannte Aufgabe dadurch gelöst, dass die beiden Leuchtmitteleinsätze Leuchtmitteleinsätze nach einem der Ansprüche 1 bis 7 sind, dass der Sockel eine Aufnahme mit einer derartigen Öffnung aufweist, so dass jeder der beiden Leuchtmitteleinsätze wenigstens teilweise durch die Öffnung in die eine Aufnahme eingeführt und dabei eine Fassung des Leuchtmitteleinsatzes elektrisch leitend mit der Anschlusseinrichtung verbunden werden kann, dass die Innenkontur der Aufnahme und die Außenkonturen der Leuchtmitteleinsätze einander wenigstens abschnittsweise im Wesentlichen entsprechen und dass die Leuchtmitteleinsätze sich hinsichtlich der Farbe des emittierten Lichts, der Lichtstärke des Leuchtmittel und/oder der Strahlungsleistung des Leuchtmittels nennenswert unterscheiden.

Da jeder der beiden Leuchtmitteleinsätze in die Aufnahme des Sockels in einer Weise eingeführt werden kann, bei der eine elektrische Verbindung zwischen dem Leuchtmitteleinsatz und dem Sockel erzielt wird, ist es möglich, unterschiedliche Leuchtmitteleinsätze, d.h. sich hinsichtlich der Farbe, der Lichtstärke und/oder der Strahlungsleistung unterscheidende Leuchtmitteleinsätze, je nach Bedarf mit identischen Sockeln zu kombinieren. Es kann also ohne weiteres ein Baukastensystem für Leuchten von Nutzfahrzeugen bereitgehalten werden, mit dem aufbauend auf einer begrenzten Anzahl unterschiedlicher Sockel und Leuchtmitteleinsätze Leuchten für unterschiedliche Einsatzzwecke zusammengesetzt werden können. Dies ist einfach, schnell und damit kostengünstig möglich.

Bei einer ersten Ausgestaltung des Systems ist vorgesehen, dass die Leuchtmitteleinsätze im in die Aufnahme eingeführten Zustand mit unterschiedlichen Anschlüssen der Anschlusseinrichtung verbunden sind. Dies bietet sich insbesondere dann an, wenn sich die Leuchtmitteleinsätze hinsichtlich der Lichtstärke oder der Strahlungsleistung unterscheiden. Dadurch, dass die Anschlusseinrichtung über unterschiedliche Anschlüsse verfügt, können verschiedene Leuchtmitteleinsätze letztlich mit unterschiedlichen, genau vorherbestimmten, Betriebsspannungen betrieben werden.

Damit sich voneinander unterscheidende Leuchtmitteleinsätze nur in sich voneinander unterscheidenden Ausrichtungen in Bezug auf den Sockel in diesen eingebracht werden können, können die Leuchtmitteleinsätze und die Leuchte Positionierungsmittel aufweisen, die entsprechend korrespondierend ausgebildet und angeordnet sind.

Nachfolgend wird die Erfindung anhand einer lediglich Ausführungsbeispiele darstellenden Zeichnung näher erläutert. In der Zeichnung zeigt:
- Fig. 1: ein Nutzfahrzeug mit einer erfindungsgemäßen Leuchte,
- Fig. 2a: einen erfindungsgemäßen Leuchtmitteleinsatz der Leuchte aus Fig. 1 in einer Seitenansicht,
- Fig. 2b: den Leuchtmitteleinsatz aus Fig. 2a in einer um 90° gedrehten Seitenansicht,
- Fig. 2c: den Leuchtmitteleinsatz aus Fig. 2a in einer Draufsicht,
- Fig. 3: eine Draufsicht auf die Leuchte aus Fig. 1 und
- Fig. 4: die Leuchte aus Fig. 1 in einer Schnittdarstellung entsprechend der Ebene III-III aus Fig. 2.

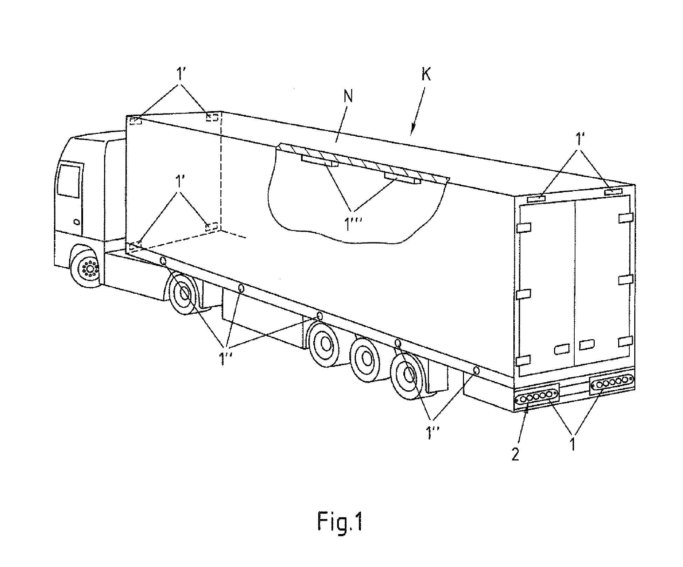

In Fig. 1 ist ein Nutzfahrzeug N in Form eines Sattelaufliegers mit zwei Leuchten 1 in Form von Rückleuten dargestellt, welche mehrere Leuchtmitteleinsätze 2 umfassen. Zudem sind an der Stirnwand und an der Rückwand des Nutzfahrzeugs N Umrissleuchten 1' vorgesehen. Diese können bedarfsweise im oberen und/oder unteren Bereich der jeweiligen Wand vorgesehen sein und dienen der Konturmarkierung des Nutzfahrzeugs N. Ebenfalls der Konturmarkierung dienen die Seitenmarkierungsleuchten 1", die in Längsrichtung entlang der Seitenwände des Nutzfahrzeugs N vorgesehen sind. Darüber hinaus sind im Inneren des Nutzfahrzeugs N den Laderaum beleuchtende Innenraumleuchten 1"' vorgesehen, die sich im dargestellten Ausführungsbeispiel in Längsrichtung des Dachs erstrecken.

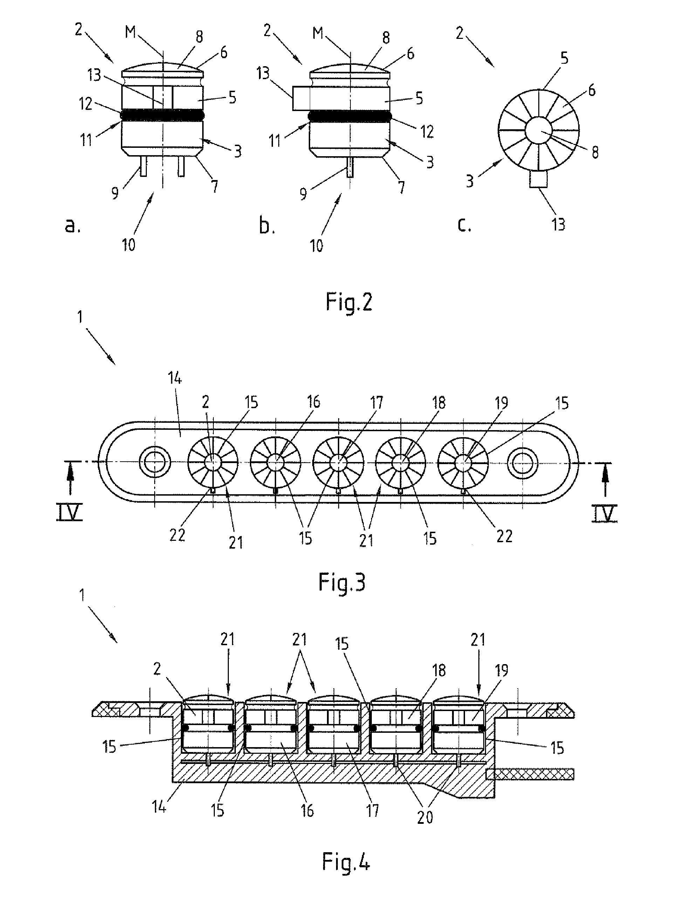

Bei dem dargestellten und insoweit bevorzugten Nutzfahrzeug weist jede Leuchte 1,1',1",1"' wenigstens einen Leuchtmitteleinsatz 2 auf. Die Leuchtmitteleinsätze 2 weisen dabei vorzugsweise im Wesentlichen die gleiche Form auf. Der in den Figuren 2a bis 2c dargestellte Leuchtmitteleinsatz 2 umfasst ein im Wesentlichen zylindrisches Gehäuse 3, das einen Innenraum umschließt, in dem ein nicht dargestelltes Leuchtmittel in Form einer Leuchtdiode angeordnet ist. Das Gehäuse 3 weist einen Gehäusemantel 5 mit einem im Wesentlichen kreisrunden Querschnitt auf. An gegenüberliegenden Enden des Gehäusemantels 5 sind ein Gehäusekopf 6 und ein Gehäuseboden 7 angeordnet. Der Gehäusekopf 6 wird im Wesentlichen durch einen transparenten Gehäuseabschnitt 8 gebildet, der eine Abstrahlung des Lichts von dem im Innenraum des Gehäuses 3 angeordneten Leuchtmittel nach außen ermöglicht. Am Gehäuseboden 7 sind zwei Anschlussstifte 9 vorgesehen, die eine Fassung 10 bilden und parallel zu einer Mittelachse M des Gehäuses 3 von dem Gehäuseboden 7 nach außen vorstehen. Die Fassung 10 ist demnach frei zugänglich und kann aufgrund dessen problemlos in eine Anschlusseinrichtung eines Sockels eingesteckt werden.

Etwa mittig zwischen dem Gehäusekopf 6 und dem Gehäuseboden 7 ist am Gehäusemantel 5 umlaufend eine Aussparung 11 in Form einer umlaufenden Vertiefung vorgesehen, in der ein Dichtelement 12 in Form eines O-Rings festgelegt ist. Dieser steht über den Außendurchmesser des Gehäusemantels 5 geringfügig vor. Ist der Leuchtmitteleinsatz 2 in eine Aufnahme eines Leuchtensockels eingebracht, liegt das Dichtelement 12 zwecks Abdichtung außen an der Innenkontur der entsprechenden Aufnahme an, wie dies etwa in der Fig. 4 dargestellt ist. Prinzipiell könnte das Dichtelement oder ein weiteres Dichtelement, vorzugsweise ebenfalls in Form eines O-Rings, auch in der weiteren umlaufen Aussparung zwischen dem Gehäusekopf 6 und dem Gehäusemantel 5 bzw. zwischen dem Gehäusekopf und einem Positionierungselement 13 vorgesehen sein. Die Dichtung wäre dann in Richtung der Öffnung der Aufnahme verschoben. Das Positionierungselement 13 ist in Form einer Rippe ausgebildet und am Gehäusemantel 5 vorgesehen. Das Positionierungselement 13 steht ferner radial nach außen über den Gehäusemantel 5 vor. Dadurch wird beim Einbau des Leuchtmitteleinsatzes 2 dessen exakte Positionierung gegenüber einem Sockel einer Leuchte ermöglicht.

Bei dem dargestellten Leuchtmitteleinsatz 2 ist die Fassung 10 als sogenannte Steckfassung ausgebildet. Ein Verschrauben oder Verdrehen der Fassung 10 zum elektrischen Verbinden des Leuchtmitteleinsatzes 2 mit einem Sockel ist daher nicht erforderlich.

Das Gehäuse 3 des Leuchtmitteleinsatzes 2 ist insgesamt zweiteilig ausgebildet, wobei der Gehäusemantel 5 und der Gehäuseboden 7 einstückig aus einem Kunststoff spritzgegossen sind, während der Gehäusekopf 6 als separates Bauteil ebenfalls spritzgegossen ist.

Die in der Fig. 3 dargestellte Leuchte 1 umfasst einen Sockel 14 mit fünf in einer Reihe angeordneten Aufnahmen 15 zum Aufnehmen von Leuchtmitteleinsätzen 2,16,17,18,19. Die in die dargestellte Leuchte 1 eingesetzten Leuchtmitteleinsätze 2,16,17,18,19 sind nicht identisch, sondern unterscheiden sich hinsichtlich der Farbe des emittierten Lichts, der Lichtstärke des Leuchtmittels und der Strahlungsleistung des jeweiligen Leuchtmittels voneinander. Allerdings haben die in der Leuchte 1 angeordneten Leuchtmitteleinsätze 2,16,17,18,19 die gleiche Gestalt. Auf diese Weise wird erreicht, dass der Sockel 14 der Leuchte 1 je nach Anwendungsfall mit unterschiedlichen Leuchtmitteleinsätzen 2,16,17,18,19 kombiniert werden kann.

Wie in der in der Fig. 4 dargestellten Schnittansicht der Leuchte 1 dargestellt ist, sind die Fassungen 10 der Leuchtmitteleinsätze 2,16,17,18,19 elektrisch leitend mit den Anschlusseinrichtungen 20 des Sockels 14 verbunden. Zudem sind die Leuchtmitteleinsätze 2,16,17,18,19 durch entsprechende Öffnungen 21 in separate Aufnahmen 15 des Sockels 14 eingesteckt. Ganz allgemein sind dabei die Innenkonturen der Aufnahmen 15 und die Außenkonturen der Leuchtmitteleinsätze 2,16,17,18,19 aufeinander abgestimmt. Die Aufnahmen 15 sind also gerade ebenso groß, dass die Leuchtmitteleinsätze 2,16,17,18,19 in die Aufnahmen 15 eingesetzt werden können, und zwar so weit, dass die Gehäusemäntel 5 der Leuchtmitteleinsätze 2,16,17,18,19 vollständig in den Aufnahmen 15 des Sockels 14 aufgenommen sind. Bei der dargestellten Leuchte 1 entsprechen die Außenkonturen der Gehäusemäntel 5 und des Gehäusekopfes 6 jeweils im Wesentlichen der angrenzenden Innenkontur der jeweiligen Aufnahme 15.

Zum Schutz der Verbindung zwischen den Fassungen 10 und den Anschlusseinrichtungen 20 des Sockels 14 liegen die entlang der Umfänge der Gehäusemäntel 5 vorgesehenen Dichtelemente 12 in Form von O-Ringen an den Innenseite der Aufnahmen 15 an, so dass eine entsprechende Abdichtung erzielt wird.

Ferner umfasst die dargestellte Leuchte Positionierungsmittel 22, von denen jeweils eines den Aufnahmen 15 des Sockels 14 zugeordnet ist. Die Positionierungsmittel 22 sind im dargestellten Beispiel als Rillen ausgebildet, in die die als Rippen ausgebildeten Positionierungselemente 13 der Leuchtmitteleinsätze eingreifen. Dadurch können die einzelnen Leuchtmitteleinsätze 2 lediglich in entsprechend vorbestimmten Ausrichtungen in Bezug auf den Sockel 14 vorgesehen werden.

Sind einer Aufnahme mehrere Anschlusseinrichtungen zugeordnet, was nicht im Einzelnen dargestellt ist, kann die Aufnahme ebenfalls mehrere Positionierungsmittel aufweisen, von denen jeweils eines mit einem Positionierungselement wenigstens eines vorgegebenen Leuchtmitteleinsatzes korrespondiert. Der entsprechende Leuchtmitteleinsatz kann dann ohne die Gefahr einer versehentlichen Verwechslung mit einer vorbestimmten Anschlusseinrichtung der Aufnahme in elektrischen Kontakt gebracht werden. In diesem Zusammenhang können in einfacher Weise die Anzahl der Positionierungsmittel und die Anzahl der Anschlusseinrichtungen jeweils für eine Aufnahme identisch sein, wobei die genannten Anzahlen zwischen den Aufnahmen eines Sockels jedoch variieren können.

Die Umrissleuchten 1', die Seitenmarkierungsleuchten 1" und die Innenraumleuchten 1"' sind bei dem dargestellten und insoweit bevorzugten Ausführungsbeispiel des Nutzfahrzeugs N gleichartig ausgebildet. Dies bedeutet, dass die Leuchtmitteleinsätze 2 der verschiedenen Leuchten 1,1',1",1"' die gleiche Form und Größe aufweisen. Bedarfsweise können die Leuchtmitteleinsätze einer oder mehrerer Arten der genannten Leuchten von den Leuchtmitteleinsätzen der übrigen Leuchten abweichen. Insbesondere die Rückleuchten können eigenständige Leuchtmitteleinsätze haben, die sich in ihrer Form und/oder Größe von den Leuchtmitteleinsätzen der übrigen Leuchten unterscheiden.

Unabhängig davon können sich die Leuchten 1,1',1",1"' natürlich hinsichtlich der Anzahl der Leuchtmitteleinsätze 2 bzw. der Anzahl der Aufnahmen 15 voneinander unterscheiden. Während beispielsweise eine Rückleuchte 1 kaum mit nur einem Leuchtmitteleinsatz 2 auskommen dürfte, kann ein Leuchtmitteleinsatz 2 pro Leuchte bei der Innenraumleuchte 1"' oder den übrigen Leuchten 1',1" zur Konturmarkierung ausreichend sein.

## Patentansprüche

1. Leuchtmitteleinsatz (2) zur Verwendung in einer Leuchte (1) eines Nutzfahrzeugs (N), insbesondere Lastkraftwagens, Anhängers und/oder Sattelaufliegers,
- mit einem Leuchtmittel und einer Fassung (10), **dadurch gekennzeichnet, dass**
- ein Gehäuse (3) vorgesehen ist,
- dass das Leuchtmittel in einem Innenraum des Gehäuses (3) und die Fassung (10) außen am Gehäuse (3) angeordnet sind und
- dass das Gehäuse (3) einen transparenten Gehäuseabschnitt (8) zur Abstrahlung des Lichts des Leuchtmittels aus dem Innenraum aufweist.

2. Leuchtmitteleinsatz nach Anspruch 1,
**dadurch gekennzeichnet, dass** das Leuchtmittel eine Leuchtdiode ist.

3. Leuchtmitteleinsatz nach Anspruch 1 oder 2,
**dadurch gekennzeichnet, dass**
- das Gehäuse (3) einen Gehäusemantel (5), einen Gehäusekopf (6) und einen Gehäuseboden (7) aufweist,
- dass die Fassung (10) dem Gehäuseboden (7) und/oder dem Gehäusemantel (5) zugeordnet ist und
- dass der transparente Gehäuseabschnitt (8) dem Gehäusekopf (6) zugeordnet ist.

4. Leuchtmitteleinsatz nach Anspruch 3,
**dadurch gekennzeichnet, dass** der Gehäusemantel (5) in Längserstreckung einen im Wesentlichen konstanten oder sich in Richtung des Gehäusebodens (7) verjüngenden, vorzugsweise symmetrischen, Querschnitt aufweist.

5. Leuchtmitteleinsatz nach einem der Ansprüche 1 bis 4,
**dadurch gekennzeichnet, dass** am Gehäuse (3), vorzugsweise am Gehäusemantel (5), Mittel zum Eindrehen in einen Sockel (14) einer Leuchte (1) und/oder Mittel zum Festlegen eines Dichtelements (12) vorgesehen sind.

6. Leuchtmitteleinsatz nach einem der Ansprüche 1 bis 5,
**dadurch gekennzeichnet, dass** insbesondere am Gehäusemantel (5) ein Positionierungselement (13), vorzugsweise in Form einer Rippe, einer Rille oder einem Finger, zum positionsgenauen Einbau in eine Leuchte (1) vorgesehen ist.

7. Leuchtmitteleinsatz nach einem der Ansprüche 1 bis 6,
**dadurch gekennzeichnet, dass** die Fassung (10) eine Steckfassung, Schraubfassung oder Bajonettfassung ist.

8. Leuchte (1) eines Nutzfahrzeugs (N), insbesondere Lastkraftwagens, Anhängers und/oder Sattelaufliegers,
- mit wenigstens einem Sockel (14) und wenigstens einem Leuchtmitteleinsatz (2),
- wobei der Sockel (14) eine Anschlusseinrichtung (20) aufweist und
- wobei die Anschlusseinrichtung (20) elektrisch leitend mit einer Fassung (10) des Leuchtmitteleinsatzes (2) verbunden ist,
**dadurch gekennzeichnet, dass**
- der Leuchtmitteleinsatz (2) ein Leuchtmitteleinsatz (2) nach einem der Ansprüche 1 bis 7 ist,
- dass der Sockel (14) eine Aufnahme (15) mit einer Öffnung (21) aufweist, durch die der Leuchtmitteleinsatz (2) in die Aufnahme (15) eingeführt ist, und
- dass die Innenkontur der Aufnahme (15) und die Außenkontur des Leuchtmitteleinsatzes (2) einander wenigstens abschnittsweise im Wesentlichen entsprechen.

9. Leuchte nach Anspruch 8,
**dadurch gekennzeichnet, dass** sich die Innenkontur der Aufnahme (15) und die Außenkontur des Leuchtmitteleinsatzes (2) einander im Bereich der Öffnung (21) im Wesentlichen entsprechen.

10. Leuchte nach Anspruch 8 oder 9,
**dadurch gekennzeichnet, dass** zwischen dem Leuchtmitteleinsatz (2) und der Aufnahme (15) eine umlaufende, zwischen der Öffnung (21) und der Anschlusseinrichtung (20) angeordnete, vorzugsweise als Dichtelement (12) oder Passfläche ausgebildete, Abdichtung zum Schutz der Anschlusseinrichtung (20) gegenüber durch die Öffnung (13) eindringender Feuchtigkeit, vorzugsweise Spritzwasser, vorgesehen ist.

11. Leuchte nach Anspruch 10,
**dadurch gekennzeichnet, dass** die Abdichtung dem Gehäusemantel (5) zugeordnet vorgesehen ist.

12. Leuchte nach einem der Ansprüche 8 bis 11,
**dadurch gekennzeichnet, dass** der Gehäusemantel (5), vorzugsweise zusammen mit dem Gehäusekopf (6), des Leuchtmitteleinsatzes (2) vollständig in der Aufnahme (15) aufgenommen ist.

13. Leuchtensystem für Nutzfahrzeuge, insbesondere Lastkraftwagen, Anhänger und/oder Sattelauflieger,
- mit wenigstens zwei Leuchtmitteleinsätzen (2) und einem Sockel (14),
- wobei der Sockel (14) wenigstens eine Anschlusseinrichtung (20) aufweist,
**dadurch gekennzeichnet, dass**
- die beiden Leuchtmitteleinsätze (2) Leuchtmitteleinsätze (2) nach einem der Ansprüche 1 bis 7 sind,
- dass der Sockel (14) eine Aufnahme (15) mit einer derartigen Öffnung (21) aufweist, so dass jedes der beiden Leuchtmitteleinsätze (2) wenigstens teilweise durch die Öffnung (21) in die Aufnahme (15) eingeführt und dabei eine Fassung (10) des Leuchtmitteleinsatzes (2) elektrisch leitend mit der Anschlusseinrichtung (20) verbunden werden kann,
- dass die Innenkontur der Aufnahme (15) und die Außenkonturen der Leuchtmitteleinsätze (2) einander wenigstens abschnittsweise im Wesentlichen entsprechen und
- dass die Leuchtmitteleinsätze (2) sich hinsichtlich der Farbe des emittierten Lichts, der Lichtstärke des Leuchtmittels und/oder der Strahlungsleistung des Leuchtmittels nennenswert unterscheiden.

14. System nach Anspruch 13,
**dadurch gekennzeichnet, dass** die Leuchtmitteleinsätze (2) im in die Aufnahme (15) eingeführten Zustand mit unterschiedlichen Anschlüssen der Anschlusseinrichtung (20) verbunden sind.

15. System nach Anspruch 13 oder 14,
**dadurch gekennzeichnet, dass** die Leuchtmitteleinsätze (2) und die Leuchte (1) Positionierungsmittel (22) aufweisen, die ein Einführen der Leuchtmitteleinsätze (2) lediglich in jeweils unterschiedlichen Ausrichtungen in Bezug auf den Sockel (14) erlauben.
